(19) Europäisches Patentamt
European Patent Office
Office européen des brevets

(11) Veröffentlichungsnummer: **0 146 841**
**A2**

(12) # EUROPÄISCHE PATENTANMELDUNG

(21) Anmeldenummer: 84114767.1

(22) Anmeldetag: 04.12.84

(51) Int. Cl.[4]: **C 08 B 37/16**

(30) Priorität: 17.12.83 DE 3345780

(43) Veröffentlichungstag der Anmeldung: 03.07.85 Patentblatt 85/27

(84) Benannte Vertragsstaaten: AT BE CH DE FR GB IT LI NL SE

(71) Anmelder: HOECHST AKTIENGESELLSCHAFT
Postfach 80 03 20
D-6230 Frankfurt am Main 80(DE)

(72) Erfinder: Brandt, Lothar, Dr. Dipl.-Chemiker
Alfred-Schumann-Strasse 23
D-6200 Wiesbaden(DE)

(72) Erfinder: Felcht, Utz-Hellmuth, Dr. Dipl.-Chemiker
Hubertusstrasse 2
D-6232 Bad Soden-Neuenhain(DE)

(54) **Wasserlösliche Mischether des beta-Cyclodextrins und ein Verfahren zu ihrer Herstellung.**

(57) Die Erfindung betrifft die neuen wasserlöslichen Mischether des β-Cyclodextrins (β-CD) mit Ethersubstituenten aus der Gruppe Alkyl ($C_1$, $C_2$), Hydroxyalkyl($C_2$ bis $C_4$) und Carboxyalkyl($C_1$,$C_2$) wie Methyl-hydroxyethyl-β-CD oder Hydroxyethyl-carboxymethyl-β-CD; ausgenommen sind dabei Hydroxyethyl-hydroxypropylether.

Das Verfahren zur Herstellung der Mischether des β-Cyclodextrins wird so durchgeführt, daß β-CD in einem ein Alkalimetallhydroxid, Wasser und gegebenenfalls mindestens ein organisches Lösemittel (z. B. Dimethoxyethan oder Isopropanol) enthaltenden basischen flüssigen Reaktionsmedium mit mindestens zwei unterschiedlichen alkylierenden, hydroxyalkylierenden und/oder carboxyalkylierenden Veretherungsmitteln (z. B. Methylchlorid, Ethylenoxid und/oder Chloressigsäure) umgesetzt wird.

EP 0 146 841 A2

HOECHST AKTIENGESELLSCHAFT
KALLE Niederlassung der Hoechst AG

83/K078

6. Dezember 1984
WLK-Dr.I.-wf

# Wasserlösliche Mischether des β-Cyclodextrins und ein Verfahren zu ihrer Herstellung

Die Erfindung betrifft bisher unbekannte wasserlösliche Mischether des β-Cyclodextrins und ein Verfahren zu ihrer Herstellung.

β-Cyclodextrin (β-CD) ist ein aus 7 Glucoseeinheiten bestehendes cyclisches Oligosaccharid, dessen Einheiten α-1,4 verknüpft sind:

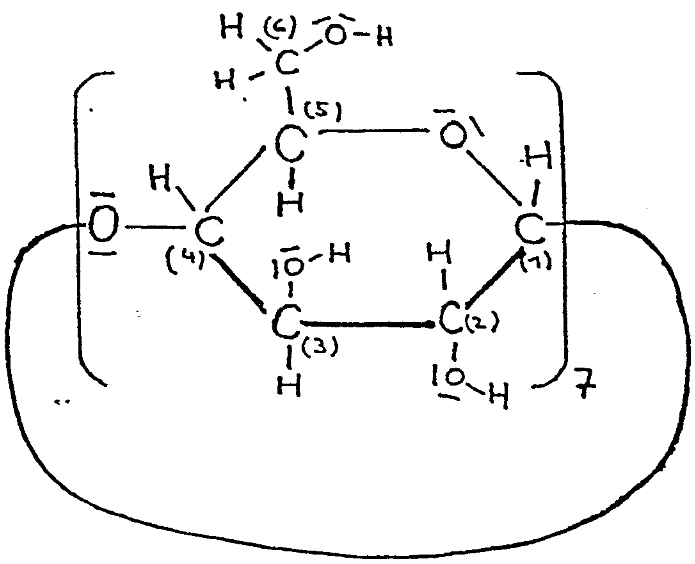

β-Cyclodextrin

Es wird durch enzymatischen Abbau der Stärke gewonnen und entsteht dabei in der Hauptsache neben α-Cyclodextrin (aus 6 Glucoseeinheiten) und γ-Cyclodextrin (aus 8 Glucoseeinheiten). Zum chemischen und physikalisch chemischen Verhalten dieser Verbindungsklasse wird auf die Aufsätze "Cyclodextrin-Einschlußverbindungen in Forschung und Industrie" von W. Saenger in Angew. Chem. 92, S. 343 bis 361 (1980), Verlag Chemie - Weinheim (DE) und "Synthesis of Chemically Modified Cyclodextrins" (Herstellung chemisch modifizierter Cyclodextrine) von A. P. Croft und R. A. Bartsch in Tetrahedron Vol. 39, Nr. 9, S. 1417 bis 1474 (1983), Pergamon Press (GB) verwiesen. Der Veretherungsreaktion stehen im β-Cyclodextrin pro Anhydro-D-glucose-Einheit maximal 3 OH-Gruppen zur Verfügung, d. h. pro β-Cyclodextrin-Molekül maximal 21 OH-Gruppen. Da die bisher bekannten Ether des β-Cyclodextrins insbesondere als Modellsubstanzen eingesetzt wurden, sind im wesentlichen solche Ether bekannt, in denen gezielt pro Anhydro-D-glucose-Einheit eine, zwei oder alle drei OH-Gruppen an den C-Atomen 2,3 und 6 substituiert sind; der Substitutionsgrad (DS) dieser Verbindungen beträgt dann 1, 2 oder 3. Es sind prinzipiell aber auch alle Zwischenstufen denkbar, denn die Substitution auch nur einer OH-Gruppe im β-Cyclodextrin-Molekül führt bereits zu einer Ethergruppe (DS von etwa 0,14). Da es statistisch bei so niedrigen Veretherungsgraden auch vorkommt, daß einige Moleküle unverethert bleiben, bei anderen aber bereits 2 oder mehr OH-Gruppen substituiert werden, ist es für die Praxis wohl vernünftig davon auszugehen, daß bei einem DS ab etwa 0,3 auch tatsächlich mindestens einfach veretherte Moleküle vorliegen.

Aus dem Stand der Technik sind bereits die folgenden Ether des β-Cyclodextrins bekannt:

- In dem bereits vorstehend erwähnten ersten der beiden Aufsätze (S. 354) werden konkret Methyl-, Natriumcarboxymethyl- und Dihydroxypropylether des β-Cyclodextrins genannt, auf die Herstellverfahren wird nicht eingegangen.

- In dem zweiten der vorstehend erwähnten Aufsätze (insbesondere ab S. 1427) werden konkret neben verschiedenen Methylethern des β-Cyclodextrins auch an den C-Atomen 2 und 6 Benzyl-, Allyl- oder Vinylgruppen und an den C-Atomen 3 Methylgruppen aufweisende Ether genannt und in ihrer Herstellung beschrieben, außerdem auch Carboxymethyl- und Carboxyethylether, Cyanoethyl- und Sulfoethylether. Die letztgenannten Verbindungen beschreiben ebenfalls die US-A 3 453 258 und die US-A 3 426 011, wobei in der letzteren auch eine Verfahrensvariante zur Herstellung von Carboxymethylethern des β-Cyclodextrins aufgeführt wird, in der die Veretherung in Gegenwart eines organischen Lösemittels (Isopropanol) und einer wäßrigen NaOH-Lösung stattfindet.

- Aus der US-PS 3 459 731 sind sowohl Hydroxyethyl- und Hydroxypropylether des β-CD bekannt als auch ein Hydroxyethyl-hydroxypropyl-Mischether.

- B. Casu et al. "Conformation of O-methylated Amylose and Cyclodextrins" (Struktur O-methylierter Amylose und

Cyclodextrine) in Tetrahedron, Vol. 24, S. 803 bis 821 (1968), Pergamon Press, beschreiben a) an den C-Atomen 2 und 6 disubstituiertes Methyl-β-CD (DS etwa 2), das durch Reaktion von β-CD mit Dimethylsulfat in einem DMF/DMSO-Gemisch in Anwesenheit von BaO erzeugt wird, und b) trisubstituiertes Methyl-β-CD (DS etwa 3), hergestellt aus β-CD mit Methyljodid in DMSO in Anwesenheit von BaO.

- R. Bergeron et al. "Complex Formation between Mycobacterial Polysaccharides or Cyclodextrins and Palmitoyl Coenzyme A" (Komplexbildung aus mykobakteriellen Polysacchariden oder Cyclodextrinen und Palmitoyl-Coenzym A) in The Journal of Biological Chemistry, Vol. 250, Nr. 4, S. 1223 bis 1230 (1975), beschreiben a) an den C-Atomen 2 und 6 disubstituiertes Methyl-β-CD und Propyl-β-CD, die durch Reaktion von β-CD mit Dimethyl- bzw. Dipropylsulfat in einem DMF/DMSO-Gemisch in Anwesenheit von BaO und $Ba(OH)_2$ erzeugt werden, b) am C-Atom 3 oder 6 monosubstituiertes Methyl-β-CD (DS etwa 1 bzw. etwa 0,7), die aus mit Schutzgruppen versehenem β-CD durch Reaktion mit Methyljodid bzw. Diazomethan hergestellt werden, und c) trisubstituiertem Methyl-β-CD, das aus disubstituiertem durch Umsetzung mit Methyljodid in einem DMF/DMSO-Gemisch in Anwesenheit von Natriumhydrid hergestellt wird.

- N. Wiedenhof et al. "Properties of Cyclodextrins/Part III/Cyclodextrin-Epichlorhydrin Resins: Preparation and Analysis" (Eigenschaften von Cyclodextrinen/Teil III/

Cyclodextrin-Epichlorhydrin-Harze: Herstellung und Zusammensetzung) in Die Stärke, 21. Jg., Nr. 5, S. 119 bis 123 (1969), beschreiben die Herstellung von β-CD-Epichlorhydrin-Polymerperlen und wasserlöslichen -Harzen durch Reaktion von β-CD mit dem bifunktionell reaktionsfähigen Epichlorhydrin in Methylisobutylketon in Anwesenheit einer wäßrigen 30%igen oder 16%igen NaOH-Lösung und $NaBH_4$.

- J. Lammers et al. "Properties of Cyclodextrins/Part VI/ Water-Soluble Cyclodextrin-Derivatives, Preparation and Analysis" (Eigenschaften von Cyclodextrinen/Teil VI/Wasserlösliche Cyclodextrinderivate, Herstellung und Zusammensetzung) in Die Stärke, 23. Jg., Nr. 5, S. 167 bis 171 (1971), beschreiben die Herstellung von a) Natriumcarboxymethyl-β-CD (DS von etwa 0,45) durch Reaktion von β-CD mit Monochloressigsäure in 30%iger wäßriger NaOH-Lösung in Anwesenheit von $NaBH_4$, und b) von Natriumsulfopropyl-β-CD (DS von etwa 0,9) durch Reaktion von β-CD mit Propansulton in 40%iger wäßriger NaOH-Lösung.

- K. Takeo et al. "Synthesis of Heptakis(2-O-methyl-β-cyclodextrin" (Herstellung des am C-Atom 2 substituierten Methyl-β-Cyclodextrins) in Die Stärke, 28. Jg., Nr. 7, S. 226/227 (1976), beschreiben die Herstellung des nur am C-Atom 2 substituierten Methyl-β-CD (DS von etwa 1) durch Methylierung des am C-Atom 6 bromierten β-CD mit Dimethylsulfat in DMF in Anwesenheit von BaO und $Ba(OH)_2 \cdot 8\ H_2O$ und Abspaltung des Bromsubstituenten.

- J. Szejtli et al. "Synthesis and $^{13}$C-NMR Spectroscopy of Methylated β-Cyclodextrins" (Herstellung und $^{13}$C-NMR Spektroskopie von methyliertem β-CD) in Starch/Stärke, 32. Jg., Nr. 5, S. 165 bis 169 (1980), beschreiben die Herstellung a) des trisubstituierten Methyl-β-CD durch Reaktion des β-CD mit Methyljodid in trockenem DMSO oder DMF in Anwesenheit von Natriumhydrid, und b) des an den C-Atomen 2 und 6 disubstituierten Methyl-β-CD durch Reaktion des β-CD mit Dimethylsulfat in einem DMSO/DMF-Gemisch in Anwesenheit von BaO und $Ba(OH)_2 \cdot 8\ H_2O$.

- In der JP-A 6883/79 werden Flüssigkristallelemente beschrieben, die beispielsweise Derivate von β-CD als cyclischem Oligosaccharid enthalten, wobei nach der dort angegebenen allgemeinen Formel u. a. die verschiedensten Hydroxyalkyl- oder Aminoalkylether möglich sein sollten. In der Beschreibung und den Beispielen wird als einziges konkretes Derivat von β-CD nur das Hydroxypropyl-β-CD genannt. Einen ähnlichen Gegenstand beschreibt die DE-A 27 04 776, wobei auch dort konkret nur Hydroxypropyl-β-CD aufgeführt wird.

- Aus der WO-A 83/00809 ist der Einsatz von quellfähigen β-Cyclodextrinderivaten in Tabletten bekannt, wobei die Derivate aus β-CD durch Umsetzung mit bifunktionell reaktionsfähigen Verbindungen wie Epichlorhydrin in wäßrig-alkalischem Medium hergestellt werden. Die Herstellung solcher Derivate ist auch aus der DE-B 14 93 047 bekannt oder unter Hinzufügung von Cellulose während der Reaktion auch aus der DE-A 31 30 502.

- Die wasserlöslichen Einschluß-Komplexe gemäß der DE-A 31 18 218 werden aus Methyl-β-CD und biologisch-aktiven organischen Verbindungen (z. B. Vitaminen oder Steroidhormonen) gebildet und sollen ein "partiell methyliertes β-Cyclodextrin" enthalten, d.h. ein Molekül, in dem mindestens 1 und maximal 20 Hydroxylgruppen verethert sind (DS von etwa 0,14 bis 2,86). Die Methyl-β-CD-Typen sollen entweder aus homogenen Molekülen bestehen oder können auch Mischungen von Molekülen mit unterschiedlichem Substitutionsgrad sein, bevorzugt wird ein im Mittel disubstituiertes Methyl-β-CD mit einem DS von etwa 2. Zur Herstellung der Derivate wird auf die weiter oben zitierten Aufsätze verwiesen.

In jüngster Zeit ist insbesondere das β-Cyclodextrin stärker in den Vordergrund getreten, da es inzwischen offensichtlich großtechnische Verfahren gibt, die eine kostengünstige Produktion ermöglichen. Aufgabe der vorliegenden Erfindung ist es, neue wasserlösliche Ether des β-Cyclodextrins zu synthetisieren, die mindestens zwei unterschiedliche Arten von Ethersubstituenten (Mischether) tragen und ein Verfahren zu ihrer Herstellung zu entwickeln.

Ein Gegenstand der Erfindung sind damit wasserlösliche Mischether des β-Cyclodextrins mit Ethersubstituenten aus der Gruppe Alkyl($C_1$,$C_2$), Hydroxyalkyl($C_2$ bis $C_4$) und Carboxyalkyl($C_1$,$C_2$), ausgenommen sind Hydroxyethyl-hydroxypropylether. Insbesondere sind dies Mischether des β-Cyclodextrins, die als Ethersubstituenten eine Methyl-,

Hydroxyethyl-, Hydroxypropyl- und/oder eine Carboxymethylgruppe aufweisen, ausgenommen sind solche, die sowohl eine Hydroxyethyl- als auch eine Hydroxypropylgruppe, aber keine anderen Gruppen aufweisen. Ein weiterer Gegenstand der Erfindung ist ein Verfahren zur Herstellung dieser Ether, bei dem β-Cyclodextrin in einem ein Alkalimetallhydroxid, Wasser und gegebenenfalls mindestens ein organisches Lösemittel enthaltenden basischen flüssigen Reaktionsmedium mit mindestens zwei unterschiedlichen alkylierenden, hydroxyalkylierenden und/oder carboxyalkylierenden Veretherungsmitteln umgesetzt wird. Unter dem Begriff "wasserlöslich" ist zu verstehen, daß das Verfahrensprodukt bei Raumtemperatur (d. h. etwa 20 °C) zu mindestens 10 Gew.-%, insbesondere zu mindestens 15 Gew.-%, wasserlöslich ist, d. h. die gesättigte Lösung enthält mindestens den angegebenen Prozentsatz. Zu den bevorzugten organischen Lösemitteln zählen Dialk($C_1$ bis $C_3$)oxyethane[Dialkyl($C_1$ bis $C_3$)glykole], Alkanole von $C_2$ bis $C_5$, Alkoxy($C_1$ bis $C_4$)alkan($C_2$ oder $C_3$)ole und aliphatische Ketone, insbesondere mit Wasser mischbare wie Dimethoxyethan, Isopropanol, tert. Butanol, Aceton und/oder Methylethylketon. Diese organischen Lösemittel sind einzeln oder im Gemisch neben Wasser im Veretherungsgemisch vorhanden.

Das erfindungsgemäße Verfahren kann in einem der bekannten Aggregate (z. B. Kneter oder Rührkessel) durchgeführt werden. Wenn die Temperatur des Reaktionsgemisches so hoch gewählt wird, daß sie über der Siedetemperatur des Gemisches aus organischen Lösemitteln/$H_2O$ liegt, emp-

HOECHST AKTIENGESELLSCHAFT
KALLE Niederlassung der Hoechst AG



fiehlt sich die Durchführung des erfindungsgemäßen Verfahrens in einer Druckapparatur; auch bei Einsatz von unter Normalbedingungen (Normaldruck, Raumtemperatur) bereits gasförmigen Reaktionskomponenten wird üblicherweise in einer Druckapparatur gearbeitet (z. B. bei Einsatz von Ethylenoxid als Veretherungsmittel).

Das Alkalimetallhydroxid ist üblicherweise NaOH (aber auch KOH oder LiOH) in fester oder gelöster Form als wäßrige Alkalimetallhydroxid-Lösung, beispielsweise in 10 bis 50 gew.-%iger Form. Bevorzugt werden im erfindungsgemäßen Verfahren 1 bis 30 Gew.-Teile an organischen Lösemitteln pro Gew.-Teil β-CD eingesetzt, der Anteil des Alkalimetallhydroxids beträgt im allgemeinen 1,5 bis 50 Mol, insbesondere 3 bis 40 Mol, pro Mol β-CD. Der Wasseranteil im Reaktionsgemisch wird bei Verwendung organischer Lösemittel zweckmäßig so gewählt, daß er - bezogen auf das Gewicht des Flüssigkeitsgemisches organische Lösemittel/Wasser - bei 3 bis 50 % liegt; bei Nichtanwesenheit organischer Lösemittel beträgt er zwischen 0,1 und 3,0 Gew.-Teilen pro Gew.-Teil β-CD. Als Veretherungsmittel werden bevorzugt Alkylchloride von $C_1$ und $C_2$, Alkylenoxide von $C_2$ bis $C_4$ und/oder Chloralkansäuren von $C_2$ und $C_3$ bzw. deren Salze oder hydrolysierbare Ester eingesetzt, insbesondere Methylchlorid, Ethylchlorid, Ethylenoxid, Propylenoxid und/oder Monochloressigsäure oder ein entsprechendes Salz oder ein Ester. Der Anteil der unter den vorgegebenen Bedingungen in allen Fällen nur monofunktionell reaktionsfähigen Veretherungsmittel beträgt in der Summe üblicherweise 3 bis 90 Mol, insbesondere 5 bis 80 Mol, pro Mol β-CD; von den einzelnen Veretherungsmitteln müssen jeweils mindestens 2,5 Mol vorhanden sein, um für jeden Substituenten einen statistischen DS von ca. 0,3 zu gewährleisten.

Die bei der Veretherungsreaktion entstehenden Mischether sind mit Ausnahme des Hydroxyethyl-hydroxypropyl-β-CD, alle noch unbekannt, zu ihnen gehören u. a. Methyl-hydroxyethyl-β-CD, Methyl-hydroxypropyl-β-CD, Ethyl-hydroxyethyl-β-CD, Hydroxyethyl-carboxymethyl-β-CD und Methyl-hydroxyethyl-carboxymethyl-β-CD, wobei Mischether auf der Basis von Methyl-β-CD bevorzugt sind; diese Verbindungen können statistische Substitutionsgrade (DS) von etwa 0,6 bis 2,5 haben und aus einheitlich aufgebauten Molekülen oder aus Gemischen von Molekülen mit unterschiedlichem Substitutionsgrad und unterschiedlicher Substituentenverteilung bestehen, so daß bei letzteren der Substitutionsgrad nur einen statistischen Mittelwert angibt. Ohnehin bezieht sich die vorstehende Angabe des Substitutionsgrades (DS) auf die Summe der substituierten OH-Gruppen und damit auf alle Ethersubstituentenarten.

Bei der praktischen Durchführung des erfindungsgemäßen Verfahrens wird zweckmäßig zuerst das β-CD in das Gemisch aus organischen Lösemitteln, Wasser und Alkalimetallhydroxid eingemischt, wonach die Zugabe der Veretherungsmittel in einer oder mehreren Stufe(n) erfolgt. Das Verfahren der Mischveretherung wird also entweder einstufig in Anwesenheit von mindestens zwei unterschiedlichen Veretherungsmitteln durchgeführt oder zweistufig in Anwesenheit von mindestens einem Veretherungsmittel pro Stufe. Die jeweiligen Reaktionsgemische und -gefäße können auch mit Inertgasen wie Stickstoff gespült werden, um oxidative Nebenreaktionen zu verhindern. Die Veretherungsreaktionen verlaufen besonders erfolgreich bei einer Temperatur zwischen 30 und 130 °C, je nach Reaktivität des verwendeten Veretherungsmittels. Die erforderlichen Zeiten in den Veretherungsreaktionen liegen - je nach Reaktionstemperatur - im allgemeinen zwischen 20 min und 8 h. In einer Trennvorrichtung (z. B. einer Zentrifuge, einem Dialysator oder einem Ionenaustauscher), nach Zugabe von fällenden Mitteln oder nach Temperaturveränderung, wird das Rohprodukt, bevorzugt nach Zugabe von Säure bis zur Neutralisation der noch unverbrauchten Basen, zunächst vom Hauptteil der flüssigen Komponenten befreit und kann dann einem Trocknungsverfahren unterzogen werden.

Die nach dem erfindungsgemäßen Verfahren herstellbaren Mischether des β-Cyclodextrins können auf den bekannten Anwendungsgebieten eingesetzt werden, also beispielsweise für die Herstellung von Einschlußverbindungen oder von Flüssigkristallelementen. Im erfindungsgemäßen Verfahren können Standardreagentien eingesetzt werden, so daß es ökonomisch und ökologisch günstiger als die bisher bekannten Verfahren für die Herstellung einfacher Ether ist.

In den folgenden Beispielen verhalten sich Gew.-Teile zu Vol.-Teilen wie kg zu $dm^3$, die Prozentangaben sind auf das Gewicht bezogen. Der "DS" ist der Substitutionsgrad, d. h. die mittlere Anzahl von substituierten OH-Gruppen

HOECHST AKTIENGESELLSCHAFT
KALLE Niederlassung der Hoechst AG



pro Anhydro-D-glucose-Einheit; er liegt bei Mischethern des β-CD im Bereich von 0,28 bis 3,0. Der "MS" ist der molare Substitutionsgrad, d. h. die mittlere Anzahl von Molen des substituierenden Reagens, die pro Mol Anhydro-D-glucose-Einheit etherartig gebunden wurden; er kann bei β-CD-Mischethern auch größer als 3,0 sein; er wird normalerweise anstelle des DS zur Charakterisierung solcher Substituenten am β-CD-Ether verwendet, die durch Mehrfachsubstitution an einer OH-Gruppe entstehen können, d.h. beispielsweise beim Hydroxyalkylsubstituenten, weil die entstehenden OH-Gruppen der Hydroxyalkylgruppen ebenfalls - wie die OH-Gruppe des β-CD selbst - substituierbar sind.

Beispiel 1

1 Gew.-Teil β-CD (handelsüblich als 97%iges Produkt) wird mit 2,4 Gew.-Teilen einer 50%igen wäßrigen NaOH-Lösung vermischt. In einem Rührautoklaven werden bei Raumtemperatur 3,0 Gew.-Teile Methylchlorid und 0,35 Gew.-Teile Ethylenoxid zugesetzt. Es wird zunächst 1 h bei 50 °C, danach noch 1,5 h bei 85 °C reagieren gelassen. Nach Abkühlung und Abblasen des überschüssigen Methylchlorids wird das praktisch neutrale Reaktionsgemisch durch Destillation von flüchtigen Nebenprodukten wie Methanol, Dimethylether etc. befreit. Die Hauptmenge des gebildeten Kochsalzes wird abfiltriert, das das Produkt neben restlichem Salz enthaltende Filtrat wird über eine Ionenaustauscherkombination geführt und danach lyophilisiert. Das verbleibende gereinigte Methyl-hydroxyethyl-β-CD hat einen mittleren Methyl-DS von 1,2 und einen Hydroxyethyl-

HOECHST AKTIENGESELLSCHAFT
KALLE Niederlassung der Hoechst AG



MS von 0,31. Es ist sehr gut wasserlöslich und kristallisiert aus wäßriger Lösung beim Erhitzen auf 90 °C nicht aus.

Beispiel 2

1 Gew.-Teil β-CD wird in 8 Vol.-Teilen Isopropanol suspendiert und mit 1,9 Gew.-Teilen einer 22%igen wäßrigen NaOH-Lösung vermischt, danach werden 0,4 Gew.-Teile Monochloressigsäure zugesetzt. Die Mischung wird in einem Rührautoklaven mit 0,8 Gew.-Teilen Ethylenoxid versetzt und bei 70 °C 3 h reagieren gelassen. Nach Abkühlung wird mit Essigsäure neutralisiert, das Lösemittel abdestilliert und gegen Wasser dialysiert. Das gereinigte wäßrige Dialysat wird lyophilisiert. Es wird Hydroxyethyl-carboxymethyl-β-CD als Na-Salz mit einem mittleren Hydroxyethyl-MS von 1,3 und einem Carboxymethyl-DS von 0,36 erhalten.

Beispiel 3

1 Gew.-Teil β-CD wird in 10 Vol.-Teilen Dimethoxyethan suspendiert und mit 2,8 Gew.-Teilen einer 50%igen wäßrigen NaOH-Lösung vermischt. Es werden 0,5 Gew.-Teile Monochloressigsäure zugesetzt, danach erfolgt in einem Rührautoklaven die Zugabe von 2,2 Gew.-Teilen Methylchlorid und 1,4 Gew.-Teilen Propylenoxid. Nach dem Aufheizen auf 60 °C wird 1 h reagieren gelassen, darauf wird die Reaktion bei 85 °C in weiteren 4 h zu Ende geführt. Das praktisch neutrale Gemisch wird nach Abkühlung und Abblasen des überschüssigen Methylchlorids durch Destillation von Dimethoxyethan und flüchtigen Nebenprodukten

HOECHST AKTIENGESELLSCHAFT
KALLE Niederlassung der Hoechst AG



befreit und wie in Beispiel 2 durch Dialyse und Lyophilisierung gereinigt und isoliert. Der dreifach substituierte β-CD-Ether hat einen mittleren Methyl-DS von 1,1, einen Carboxymethyl-DS von 0,41 und einen Hydroxypropyl-MS von 0,33.

.-.-.-.

H O E C H S T   A K T I E N G E S E L L S C H A F T
KALLE Niederlassung der Hoechst AG



## Patentansprüche

1. Wasserlösliche Mischether des β-Cyclodextrins mit Ethersubstituenten aus der Gruppe Alkyl($C_1$,$C_2$), Hydroxyalkyl($C_2$ bis $C_4$) und Carboxyalkyl($C_1$,$C_2$), ausgenommen Hydroxyethyl-hydroxypropylether.

2. Mischether nach Anspruch 1, dadurch gekennzeichnet, daß sie Ethersubstituenten aus der Gruppe Methyl, Hydroxyethyl, Hydroxypropyl und Carboxymethyl aufweisen.

3. Mischether nach Anspruch 1 oder 2, dadurch gekennzeichnet, daß der Substitutionsgrad (DS) der Mischether des β-Cyclodextrins zwischen 0,28 und 3,0 liegt.

4. Mischether nach einem der Ansprüche 1 bis 3, dadurch gekennzeichnet, daß einer der Ethersubstituenten Methyl ist.

5. Verfahren zur Herstellung der Mischether nach einem der Ansprüche 1 bis 4, dadurch gekennzeichnet, daß β-Cyclodextrin in einem ein Alkalimetallhydroxid, Wasser und gegebenenfalls mindestens ein organisches Lösemittel enthaltenden basischen flüssigen Reaktionsmedium mit mindestens zwei unterschiedlichen alkylierenden, hydroxyalkylierenden und/oder carboxyalkylierenden Veretherungsmitteln umgesetzt wird.

H O E C H S T   A K T I E N G E S E L L S C H A F T
KALLE Niederlassung der Hoechst AG



6. Verfahren nach Anspruch 5, dadurch gekennzeichnet, daß mindestens ein organisches Lösemittel aus der Gruppe Dialk($C_1$ bis $C_3$)oxyethane, Alkanole von $C_2$ bis $C_5$, Alkoxy($C_1$ bis $C_4$)alkan($C_2$ oder $C_3$)ole und aliphatische Ketone eingesetzt wird.

7. Verfahren nach Anspruch 5 oder 6, dadurch gekennzeichnet, daß mindestens zwei Veretherungsmittel aus der Gruppe Alkylchloride von $C_1$ und $C_2$, Alkylenoxide von $C_2$ bis $C_4$ und Chloralkansäuren von $C_2$ und $C_3$ eingesetzt werden.

8. Verfahren nach einem der Ansprüche 5 bis 7, dadurch gekennzeichnet, daß die Mischveretherung einstufig in Anwesenheit von mindestens zwei unterschiedlichen Veretherungsmitteln durchgeführt wird.

9. Verfahren nach einem der Ansprüche 5 bis 7, dadurch gekennzeichnet, daß die Mischveretherung zweistufig in Anwesenheit von mindestens einem Veretherungsmittel pro Stufe durchgeführt wird.

96

.-.-.-.